# FASCICULE DE BREVET EUROPEEN

(11) **EP 0 801 031 B1**
(45) Date de publication et mention de la délivrance du brevet: **04.07.2001**
(21) Numéro de dépôt: 97200982.3
(22) Date de dépôt: 03.04.1997
(51) Int. Cl.: C02F 1/48

(54) **Dispositif pour le traitement d'eau au moyen d'un champ magnétique**
Vorrichtung zur Wasserbehandlung mittels eines magnetischen Feldes
Device for treating water in a magnetic field

(30) Priorité: 11.04.1996 BE 9600316
(43) Date de publication de la demande: 15.10.1997
(73) Titulaire: Alnaco N.V., 3450 Geetbets (BE)
(72) Inventeur: Dehaes, Francine, 3450 Geetbets (BE)
(74) Mandataire: Donné, Eddy

(56) Documents cités:
- WO-A-87/05003

## Description

Cette invention concerne un dispositif pour le traitement d'eau, plus particulièrement un dispositif en vertu duquel l'eau est traitée au moyen d'un champ électro-magnétique.

Afin d'éviter des précipités calcaires dans des conduites et dans des appareils, il est connu de conduire de l'eau à travers un champ magnétique, de sorte que les particules calcaires sont divisées en particules microscopiques perdant ainsi la propriété de se précipiter sur les parois de conduites et d'appareils.

Comme il est décrit au EP 0 259 408 emploi peut être fait à cet effet d'un dispositif devant être positionné contre la surface externe d'une conduite et consistant essentiellement d'un électro-aimant composé d'un noyau en lamelles, les lamelles étant chacune movibles et le noyau de l'électro-aimant pouvant ainsi s'adapter au corps de ladite conduite. Les lamelles sont forcées dans la direction de la conduite puisque le noyau est pressé contre la conduite au moyen d'un élément de serrage. Afin d'obtenir une adaption optimale des lamelles contre la conduite, une bande de matériaux, pouvant être enfoncée élastiquement, est inserrée entre les lamelles et l'élément de serrage.

Bien qu'avec le dispositif suivant le EP 0 259 408 des résultats relativement favorables peuvent être obtenus, il offre différents inconvénients. Ainsi, par example, il ne convient pas pour coopérer avec des conduites ayant des formes variées, puisque la bande de matériaux, pouvant être enfoncée élastiquement, ne peut plus garantir le contact de toutes les lamelles avec la conduite. Ainsi, certaines lamelles ne sont plus positionnées de manière optimale résultant dans une diminution du rendement du dispositif. Par ailleurs, certaines lamelles peuvent se libérer ce qui produit une vibration de celles-ci lors de l'usage d'un branchement classique au courant alternatif, produisant d'une part un bruit indésirable et d'autre part des vibrations dans le dispositif, ce qui peut provoquer des dégâts.

L'invention a pour objet un dispositif pour le traitement d'eau, d'un type similaire, cependant n'offrant pas les inconvénients précités.

A cet effet, l'invention concerne un dispositif pour le traitement d'eau au moyen d'un champs magnétique, comprenant un électro-aimant avec un noyau composé de lamelles ou de groupes de lamelles, pourvu d'un solénoïde, les lamelles ou groupes de lamelles étant mutuellement mobiles de sorte que les extrémités des lamelles peuvent être positionnées contre une conduite au moment que le dispositif est monté contre cette conduite, caractérisé en ce que le dispositif est pourvu de moyens de pression qui pressent les lamelles, ou les groupes de lamelles, indépendamment l'une de l'autre, dans la direction desdites extrémités.

En faisant emploi de moyens de pression, pressant les lamelles ou les groupes de lamelles indépendamment l'une de l'autre, chaque lamelle ou chaque groupe de lamelle, indépendamment des lamelles ou des groupes de lamelles adjacents, est pressée contre la conduite, garantissant ainsi un contact optimal avec la conduite.

De préférence chaque lamelle ou groupe de lamelles est pourvu de son propre moyen de pression, comme par exemple des ressorts.

Suivant le mode d'exécution le plus préférentiel il n'est pas fait usage de groupes de lamelles, mais chaque lamelle est mobile vis-à-vis de la lamelle adjacente et chaque lamelle est pourvue d'éléments de pression propres.

Suivant un mode d'exécution préférentiel les moyens de pression sont tels que les lamelles prennent une position fixe en état libre. Ceci provoque l'avantage qu'aucune des lamelles puisse se libérer excluant ainsi les inconvénients précités, comme par exemple la provocation de vibrations.

Suivant encore une autre caractéristique importante de l'invention, le dispositif est pourvu de moyens de pression qui, pour les lamelles ou groupes de lamelles consécutifs, sont alternativement localisés sur deux ou plusieurs endroits distincts, plus particulièrement sur différents niveaus. De cette manière l'avantage est obtenu que l'épaisseur des lamelles n'est plus dépendente des dimensions des moyens de pression, et un grand nombre de lamelles fines peut être appliqué ce qui contribut à un rendement optimal du dispositif.

En vue de mieux démontrer les caractéristiques de l'invention est décrit ci-dessous, en tant qu'exemple et sans caractère limitatif, un mode d'exécution préféré avec référence aux dessins accompagnants dans lesquels :
- la figure 1 montre, en vue schématique, un inconvénient du dispositif connu;
- la figure 2 montre de façon schématique et partiellement découpé, un dispositif suivant l'invention;
- la figure 3 montre en vue schématique une section selon la ligne III-III dans la figure 2;
- les figures 4 et 5 montrent des lamelles étant indiqué dans la figure 2 schématiquement avec F4 et F5;
- la figure 6 montre de façon schématique, l'emploi du dispositif des figures 2 et 3;
- les figures 7-8, 9-10 et 11-12 représentent, de manière schématisée, respectivement la situation avant et après l'application du dispositif sur une conduite, pour trois conduites ayant des sections différentes.

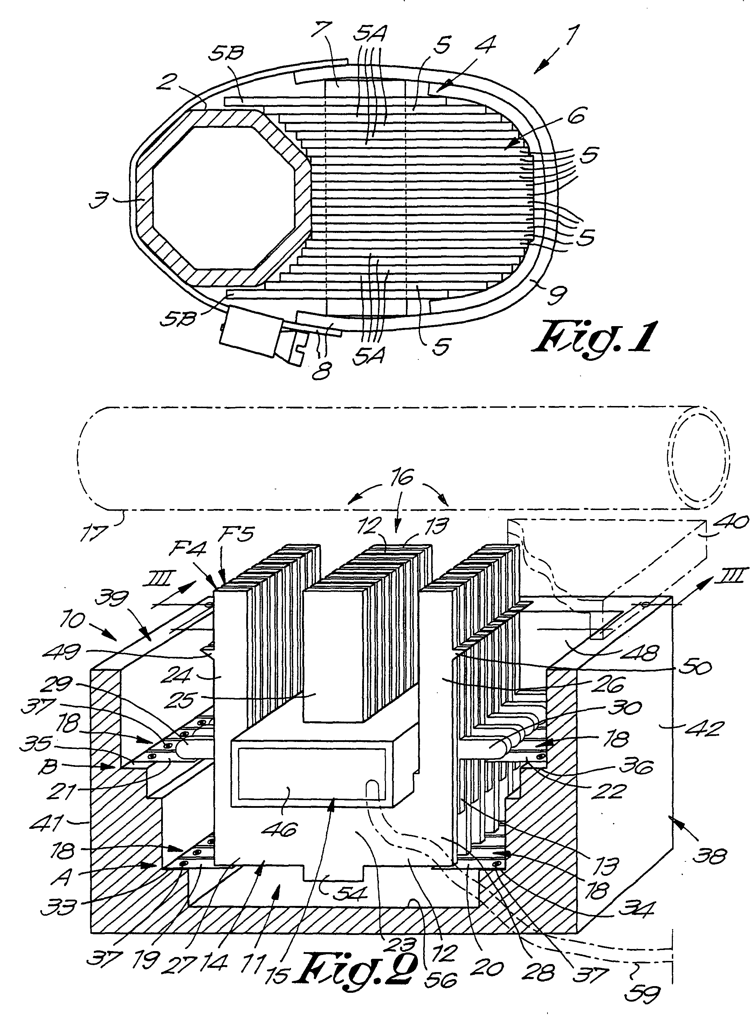

Comme il est connu du EP 0 259 408, et comme représenté schématiquement à la figure 1, pour le traitement d'eau, emploi peut être fait d'un dispositif 1 pouvant être positionné à la surface externe 2 d'une conduite 3, composé essentiellement d'un électro-aimant 4 avec un noyau 6 composé de lamelles 5-5A-5B, pourvu d'un solénoïde 7. Il est également connu de faire emploi à ce sujet de lamelles 5-5A-5B étant individuellement mobiles, qui sont pressées contre la surface externe 2 au moyen d'un élément de serrage 8, et d'une bande en matériaux 9, pouvant être enfoncée élastiquement, qui est inserrée entre ledit élément de serrage 8 et les lamelles 5.

Comme représenté à la figure 1, cette solution offre l'inconvénient que dans certaines applications un nombre de lamelles SA ne sont pas pressées jusqu'à la surface externe 2 et parviennent en position libre. Ainsi de même, les lamelles 5B se trouvant à côté de la conduite 3, viennent dans une position libre.

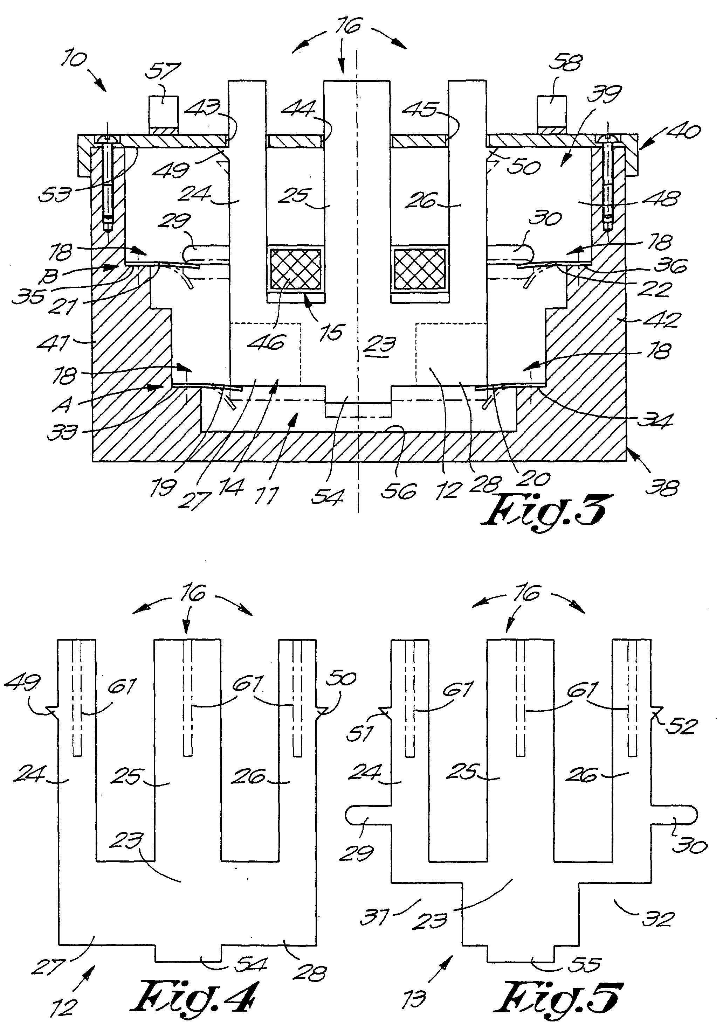

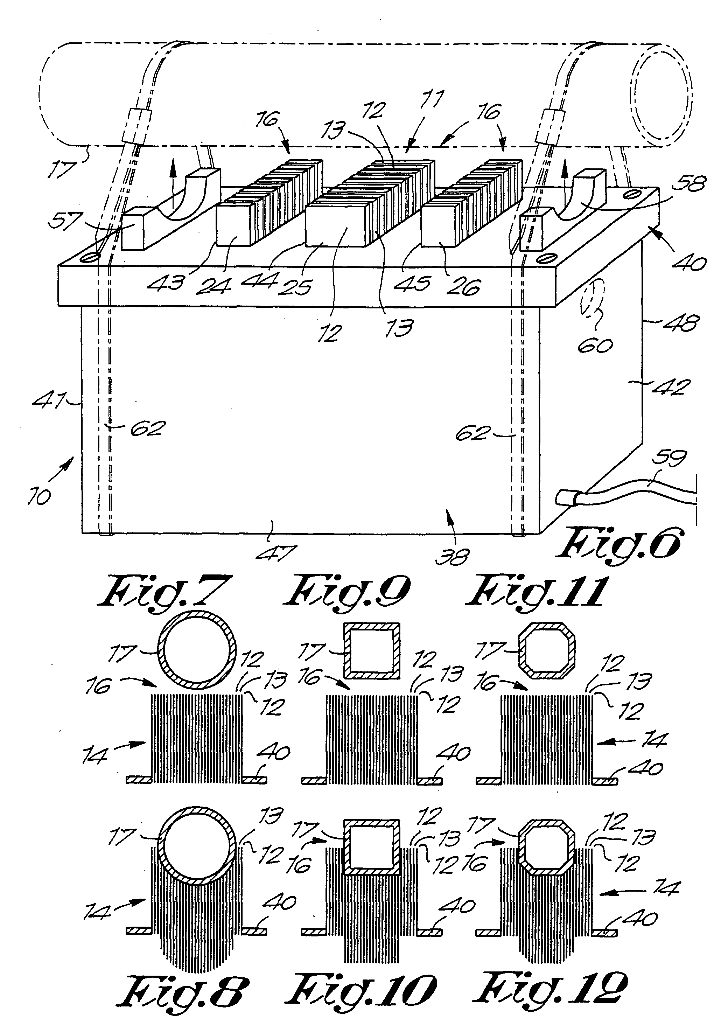

Pour remédier à cet inconvénient et autres, l'invention a pour objet un dispositif 10 qui, comme représentée aux figures 2 et 3, consiste essentiellement d'un électro-aimant 11 avec un noyau 14, composé de lamelles 12-13, ou éventuellement de groupes de lamelles, pourvu d'un solénoïde 15, les lamelles 12-13 ou groupes de lamelles, étant mutuellement mobile de sorte que les extrémitées 16 des lamelles 12-13 peuvent être positionnées contre une conduite 17, plus particulièrement une conduite d'eau, avec la particularité que ce dispositif 10 est pourvu de moyens de pression 18 qui pressent les lamelles 12-13, ou groupes de lamelles, indépendamment l'une de l'autre, dans la direction des extrémitées précitées 16.

Suivant le mode d'exécution représenté aux figures 2 et 3, chaque lamelle 12-13 est pressée séparément.

Comme représenté les moyens de pression 18 consistent de préférence de moyens élastiques, comme des ressorts, plus particulièrement quatre séries de ressorts à lames 19-20-21-22, chaque lamelle étant pressée au moyen de ressorts à lames séparés, dans l'exemple représenté, chaque fois deux ressorts à lames par lamelle.

Comme représenté aux figures 2 et 3, les moyens de pression 18 des lamelles successives, plus particulièrement d'une part les lamelles 12, et d'autre part les lamelles 13, sont localisés sur deux endroits et plus particulièrement encore sur deux niveaus, respectivement A et B.

Comme représenté aux figures 4 et 5, de préférence usage est fait de deux series de différentes lamelles 12-13. La forme de base des deux lamelles 12-13 est essentiellement identique, et est composée d'une partie dorsale 23 et d'un nombre de jambes 24-25-26 s'allongeant à partir de cette partie dorsale 23, essentiellement en forme d'une E. Toutefois, les lamelles 12, d'une part, et les lamelles 13, d'autre part, sont pourvues de différentes parties, se faisant mutuellement saillie, respectivement 27-28 et 29-30, sur lesquelles les moyens de pression 18 agissent, tel que la place prise par les ressorts à lames 19-20 et 21-22 n'est pas déterminant pour l'épaisseur des lamelles 12-13.

Les parties 27-28 faisant saillies, des lamelles 12 sont formées par une partie de la partie dorsale 23 qui se prolonge plus loin pour les lamelles 12 que les lamelles 13. Ceci se réalise en coupant de la partie dorsale 23 des lames 13 les parties 31-32.

Les parties 29-30, faisant saillie, sont constituées par des lèvres sur les jambes extérieurs 24-26 des lamelles 13.

Les ressorts à lames 19-20 et 21-22 peuvent être fixés, de part et d'autre du rangement des lamelles, avec une de leurs extrémités à des supports 33-34 et 35-36, par exemple au moyen de vis 37, tel que les ressorts à lames 19-20, avec leur extrémités libres, pressent contre les surfaces inférieures des parties 27-28 et les ressorts à lames 21-22, avec leurs extrémités libres, pressent contre les surfaces inférieures des parties 29-30.

Les lamelles 12-13, à l'exception des extrémités 16 de celles-ci qui doivent être mises en contact avec la conduite 17, le solénoïde 15 et les moyens de pression 18 sont de préférence mis dans un logement 38 qui est composé d'un boîtier 39 avec un couvercle 40 faisant partie avec celle-ci 40, l'un et l'autre comme représenté aux figures 3 et 6.

Comme représenté aux figures 2 et 3, les supports précités 33-34-35-36 peuvent être formés de parties montrant une forme d'escalier étant aménagées dans les parois opposés 41-42 du boîtier 39.

Dans le couvercle 49 sont apportés des trous 43-44-45 facilant un passage précis des jambes 24-25-26.

Le solénoïde 15 est apporté sur un noyau de bobine 46 qui est, par exemple, fixé aux parois 47-48 du boîtier 39. Ce noyau de bobine 46 enveloppe les jambes 25 tel qu'il constitue une conduite pour les lamelles 12-13.

L'ensemble est tel que les moyens de pression 18 pressent les lamelles 12-13, en position libre, c'est-à-dire quand elles ne sont pas pressées contre la conduite 17, contre une butée, tel que les lamelles 12-13 ne parviennent jamais dans une position libre. Dans l'exemple représenté des figures 2 et 3, ceci est réalisé en pourvoyant les lamelles 12-13 de saillies 49-50 et 51-52, qui viennent en contact avec la partie inférieure 53 du couvercle 40.

Il est évident que le noyau de bobine 46 peut également servir de butée.

Suivant une variante, en fixant les lamelles aux moyens de pression 18 on éliminera la naissance de lames libres. Dans l'exemple représenté ceci peut se réaliser par connection des lamelles 12-13 aux extrémités libres des ressorts à lames 19-20-21-22. Dans un tel cas on ne nécessite plus de butée.

De préférence le dispositif est également prévu de moyens formant butée qui limitent l'enfoncement des lamelles 12-13, afin de ne pas surcharger excessivement les moyens de pression élastiques. Suivant l'exemple représenté, ces moyens consistent de parties formant butée 54-55 aux lamelles 12-13, qui, par leur contact avec le fond 56 du logement 38, limitent l'enfoncement.

De plus, le dispositif peut être pourvu d'un ou de plusieurs sièges 57-58 pour fixer de manière centrée le dispositif 10 contre la conduite 17 qui, suivant la représentation aux figures 3 et 6, peuvent être appliqués sur le couvercle 40.

Le solénoïde est alimenté par un branchement électrique au moyen d'un câble 59. Pour évacuer les calories produites lors de la mise en fonction du solénoïde, un nombre de trous d'aération peuvent être prévus, comme par exemple, un trou 50 dans le logement 38 ou des trous 61 dans les lamelles 12-13.

Il est à noter que les figures 2 à 6 ne représentent qu'une vue schématique de l'invention en qu'en réalité les lamelles sont très minces et se trouvent l'une à côté de l'autre. Ainsi, par exemple, l'épaisseur de l'arrangement des lamelles sera, dans un grand nombre d'applications, de 2 cm, tandis que l'épaisseur d'une lamelle est d'environ 0,5 mm.

Les moyens de pression 18 permettent de préférence un enfoncement d'environ 1 cm.

Le montage et l'emploi du dispositif 10 est parfaitement clair dans la figure 6. A cet effet le dispositif 10 est serré contre la conduite 17 concernée au moyen d'une ou plusieurs bandes 62, cordes ou similaires. Comme montré dans les figures respectives 7 et 8, les lamelles 12-13 enveloppent de manière parfaite la conduite 17.

Pour activer le fonctionnement du dispositif 10 il suffit de pourvoir dans un branchement du câble électrique 59 à une source d'alimentation.

Les figures 9 à 12 mettent en évidence la parfaite jonction des lamelles 12-13, indépendamment de la forme de la conduite 17.

Il est évident que le dispositif 10 peut être réalisé en différentes formes. Ainsi, par exemple, les lamelles ne doivent pas nécessairement être en forme d'une E, mais peuvent être en forme d'une U. Au lieu de deux series de lamelles 12-13 qui sont pressées sur deux niveaux A-B, il n'est pas exclu de faire usage de seulement une série ou plus que deux séries.

Au lieu de moyens élastiques, d'autres modes d'exécution peuvent être appliqués comme moyens de pression 18. Suivant un mode d'exécution particulier une pression magnétique sera employée, par exemple, en mettant un aimant sous les lamelles 12-13 qui les soulève.

Au lieu de lamelles séparées 12-13, usage peut également être fait de groupes de lamelles. Ainsi, par exemple, une lamelle 12 peut être remplacée par deux ou plusieurs lamelles étant solidement fixées l'une contre l'autre, par exemple par collage.

## Revendications

1. Dispositif pour le traitement d'eau au moyen d'un champs magnétique, comprenant un électro-aimant (11) avec un noyau (19) composé de lamelles (12-13) ou de groupes de lamelles, pourvu d'un solénoïde (15), les lamelles (13-13) ou groupes de lamelles étant mutuellement mobiles de sorte que les extrémités (16) des lamelles (12-13) peuvent être positionnées contre une conduite (17) au moment que le dispositif est monté contre cette conduite, caractérisé en ce que le dispositif (10) est pourvu de moyens de pression (18) qui pressent les lamelles (12-13), ou les groupes de lamelles, indépendamment l'une de l'autre, dans la direction desdites extrémités (16).

2. Dispositif suivant la revendication 1, caractérisé en ce que toutes les lamelles (12-13) sont indépendamment mobiles.

3. Dispositif suivant la revendication 1 ou 2, caractérisé en ce que les lamelles (12-13), ou les groupes de lamelles, sont pourvus individuellement de leur propre moyen de pression.

4. Dispositif suivant la revendication 1, 2 ou 3, caractérisé en ce que les moyens de pression (18) sont des moyens élastiques.

5. Dispositif suivant la revendication 4, caractérisé en ce que les moyens élastiques sont des ressorts à lames (19-20-21-22).

6. Dispositif suivant la revendication 4 ou 5, caractérisé en ce que les moyens de pression (18) des lamelles (12-13) ou groupes de lamelles consécutifs sont localisés alternativement sur deux ou plusieurs endroits distincts.

7. Dispositif suivant la revendication 6, caractérisé en ce qu'elle comporte deux ou plusieurs séries de lamelles (12-13) ou groupes de lamelles et que les moyens de pression (18) des differentes séries se trouvent, selon la direction de la pression, sur differents niveaux (A-B).

8. Dispositif suivant la revendication 7, caractérisé en ce que les lamelles (12-13) des différentes séries sont pourvues de parties (27-28-29-30) faisant mutuellement saillie, sur lesquelles les moyens de pression (18) agissent.

9. Dispositif suivant la revendication 8, caractérisé en ce que les lamelles (12-13) sont formées d'une partie dorsale (23) et d'un nombre de jambes (24-25-26) s'allongeant à partir de cette partie dorsale (23) et que les parties (27-28), faisant saillie, d'une part, pour une première serie de lamelles (12), sont réalisées par une partie de la partie dorsale (23) qui se prolonge avec ces lamelles (12) plus loin qu'avec les lamelles (13) de l'autre série, et, d'autre part, pour une seconde série de lamelles (13), sont formées par des lèvres qui sont appliquées sur les jambes extérieures (24-26).

10. Dispositif suivant la revendication 9, caractérisé en ce que les moyens de pression (18) consistent de quatre séries de ressorts à lames (19-20-21-22), respectivement deux séries qui se trouvent sur un premier niveau (A) et coopèrent avec les parties (27-28), faisant saillie, des lamelles (12) de la première série et deux séries qui se trouvent sur un second niveau (B) et coopèrent avec les parties faisant saillie (29-30) de la seconde série.

11. Dispositif suivant l'une quelconque des revendications précédentes, caractérisé en ce que les lamelles (12-13), ou groupes de lamelles, en position libre, sont mises ou retenues en une position déterminée.

12. Dispositif suivant la revendication 11, caractérisé en ce qu'elle est pourvue de moyens de pression (18) qui pressent les lamelles (12-13) ou groupes de lamelles dans leur position libre contre une butée, tel que les lamelles (12-13) ou groupes de lamelles se trouvent toujours dans une condition tendue.

13. Dispositif suivant l'une quelconque des revendications précédentes, caractérisé en ce que les lamelles (12-13), à l'exception des extrémités (16) qui doivent être mises en contact avec la conduite (17), le solénoïde (15) et les moyens de pression (18) sont mis dans un logement (38), ce logement (38) consistant essentiellement d'un boîtier (39) et un couvercle (40), en faisant partie, et que le solénoïde (15) est fixé dans le boîtier (39).

14. Dispositif suivant l'une quelconque des revendications précédentes, caractérisé en ce qu'il est pourvu de moyens de butée qui limitent l'enfoncement des lamelles (12-13) à l'encontre de la force des éléments de pression (18).

15. Dispositif suivant l'une quelconque des revendications précédentes, caractérisé en ce que les lamelles (12-13), à l'encontre de la force des moyens de pression (18), peuvent être enfoncées sur une distance d'au moins 1 cm.

16. Dispositif suivant l'une quelconque des revendications précédentes, caractérisé en ce qu'il est pourvu d'un ou plusieurs sièges (57-58) permettant de centrer le dispositif (10) vis-à-vis de la conduite (17).

## Patentansprüche

1. Vorrichtung zur Wasserbehandlung mittels eines magnetischen Feldes, umfassend einen Elektromagneten (11) mit einem aus Lamellen (12-13) oder Gruppen von Lamellen geformten Kern (19), der mit einem Solenoiden (15) versehen ist, wobei die Lamellen (12-13) oder Gruppen von Lamellen in Bezug zueinander derart verschiebbar sind, dass die Enden (16) der Lamellen (12-13) gegen eine Leitung (17) positioniert werden können, wenn die Vorrichtung gegen diese Leitung montiert wird, dadurch gekennzeichnet, dass die Vorrichtung (10) mit Andrückmitteln (18) versehen ist, die die Lamellen (12-13), oder die Gruppen von Lamellen, unabhängig voneinander in die Richtung der besagten Enden (16) andrücken.

2. Vorrichtung gemäß Anspruch 1, dadurch gekennzeichnet, dass alle Lamellen (12-13) unabhängig bewegbar sind.

3. Vorrichtung gemäß Anspruch 1 oder 2, dadurch gekennzeichnet, dass die Lamellen (12-13), oder die Lamellengruppen, individuell mit ihren eigenen Andrückmitteln versehen sind.

4. Vorrichtung gemäß Anspruch 1, 2 oder 3, dadurch gekennzeichnet, dass die Andrückmittel (18) elastische Mittel sind.

5. Vorrichtung gemäß Anspruch 4, dadurch gekennzeichnet, dass die elastischen Mittel Blattfedern (19-20-21-22) sind.

6. Vorrichtung gemäß Anspruch 4 oder 5, dadurch gekennzeichnet, dass sich die Andrückmittel (18) der aufeinanderfolgenden Lamellen (12-13) oder Gruppen von Lamellen abwechselnd an zwei oder mehr unterschiedlichen Stellen befinden.

7. Vorrichtung gemäß Anspruch 6, dadurch gekennzeichnet, dass sie zwei oder mehr Serien von Lamellen (12-13) oder Gruppen von Lamellen umfasst und dass die Andrückmittel (18) der verschiedenen Serien sich gemäß der Andrückrichtung auf verschiedenen Niveaus (A-B) befinden.

8. Vorrichtung gemäß Anspruch 7, dadurch gekennzeichnet, dass die Lamellen (12-13) der verschiedenen Serien mit in Bezug zueinander vorspringenden Teilen (27-28-29-30) versehen sind, auf die die Andrückmittel (18) einwirken.

9. Vorrichtung gemäß Anspruch 8, dadurch gekennzeichnet, dass die Lamellen (12-13) von einem Rückenteil (23) und einer Anzahl sich ab diesem Rückenteil (23) erstreckender Beine (24-25-26) gebildet werden und dass die vorspringenden Teile (27-28) einerseits, für eine erste Serie von Lamellen (12), von einem Teil des Rückenteils (23) gebildet werden, der sich bei diesen Lamellen (12) weiter erstreckt als bei den Lamellen (13) der anderen Serie, und andererseits, für eine zweite Serie von Lamellen (13), von Lippen geformt werden, die an den äußeren Beinen (24-26) angebracht sind.

10. Vorrichtung gemäß Anspruch 9, dadurch gekennzeichnet, dass die Andrückmittel (18) aus vier Serien von Blattfedern (19-20-21-22) bestehen, nämlich zwei Serien, die sich auf einem ersten Niveau (A) befinden und mit den vorspringenden Teilen (27-28) der Lamellen (12) der ersten Serie zusammenwirken, beziehungsweise zwei Serien, die sich auf einem zweiten Niveau (B) befinden und mit den vorspringenden Teilen (29-30) der zweiten Serie zusammenwirken.

11. Vorrichtung gemäß einem der vorgenannten Ansprüche, dadurch gekennzeichnet, dass die Lamellen (12-13), oder Gruppen von Lamellen, in freiem Zustand in eine bestimmte Position gebracht oder darin gehalten werden.

12. Vorrichtung gemäß Anspruch 11, dadurch gekennzeichnet, dass sie mit Andrückmitteln (18) versehen ist, die die Lamellen (12-13) oder Gruppen von Lamellen in ihrem freien Zustand gegen einen Anschlag drücken, derart, das die Lamellen (12-13) oder Gruppen von Lamellen sich stets in einem angespannten Zustand befinden.

13. Vorrichtung gemäß einem der vorgenannten Ansprüche, dadurch gekennzeichnet, dass die Lamellen (12-13), mit Ausnahme der Enden (16), die mit der Leitung (17) in Kontakt gebracht werden müssen, der Solenoid (15) und die Andrückmittel (18) in einem Gehäuse (38) untergebracht sind, wobei dieses Gehäuse (38) hauptsächlich aus einem kastenförmigen Teil (39) und einem damit zusammenwirkenden Deckel (40) besteht, und wobei der Solenoid (15) in dem kastenförmigen Teil (39) befestigt ist.

14. Vorrichtung gemäß einem der vorgenannten Ansprüche, dadurch gekennzeichnet, dass sie mit Anschlagmitteln versehen ist, die das Eindrücken der Lamellen (12-13) gegen die Kraft der Andrückmittel (18) begrenzen.

15. Vorrichtung gemäß einem der vorgenannten Ansprüche, dadurch gekennzeichnet, dass die Lamellen (12-13), gegen die Kraft der Andrückmittel (18), über einen Abstand von mindestens 1 cm eingedrückt werden können.

16. Vorrichtung gemäß einem der vorgenannten Ansprüche, dadurch gekennzeichnet, dass sie mit einem oder mehr Sitzen (57-58) versehen ist, die das Zentrieren der Vorrichtung (10) in Bezug zur Leitung (17) gestatten.

## Claims

1. Device for treating water in a magnetic field, consisting of an electromagnet (11) with a core (19) composed of lamellas (12-13) or groups of lamellas, provided with a solenoid (15), whereby the lamellas (12-13) or groups of lamellas can move in relation to one another, such that the far ends (16) of the lamellas (12-13) can be placed against a conduit (17) when the device is mounted against said conduit, characterised in that the device (10) is provided with pressure means (18) which press the lamellas (12-13), or the groups of lamellas, irrespective of one another, in the direction of said far ends (16).

2. Device according to claim 1, characterised in that all the lamellas (12-13) can move irrespective of one another.

3. Device according to claim 1 or 2, characterised in that the lamellas (12-13), or the groups of lamellas, are individually provided with their own pressure means.

4. Device according to claim 1, 2 or 3, characterised in that the pressure means (18) are elastic means.

5. Device according to claim 4, characterised in that the elastic means are leaf springs (19-20-21-22).

6. Device according to claim 4 or 5, characterised in that the pressure means (18) of the lamellas (12-13) or successive groups of lamellas are alternately situated in two or several distinct places.

7. Device according to claim 6, characterised in that it contains two or several series of lamellas (12-13) or groups of lamellas, and in that the pressure means (18) of the different series are situated on different levels (A-B), depending on the direction of the pressure.

8. Device according to claim 7, characterised in that the lamellas (12-13) of the different series are provided with parts (27-28-29-30) which protrude in relation to one another, upon which the pressure means (18) act.

9. Device according to claim 8, characterised in that the lamellas (12-13) are formed of a back part (23) and a number of legs (24-25-26) extending as of this back part (23), and in that the protruding parts (27-28) consist, for a first series of lamellas (12), of a part of the back part (23) which extends further with these lamellas (12) than with the lamellas (13) of the other series on the one hand, and which are formed, for a second series of lamellas (13), of lips which are applied on the outer legs (24-26).

10. Device according to claim 9, characterised in that the pressure means (18) consist of four series of leaf springs (19-20-21-22), two series respectively, which are situated on a first level (A) and which work in conjunction with the protruding parts (27-28) of the lamellas (12) of the first series, and two series which are situated on a second level (B) and which work in conjunction with the protruding parts (29-30) of the second series.

11. Device according to any of the preceding claims, characterised in that the free lamellas (12-13) or groups of lamellas are placed or retained in a specific position.

12. Device according to claim 11, characterised in that it is provided with pressure means (18) which press the lamellas (12-13) or groups of lamellas in their free-position against a stop, such that the lamellas (12-13) or groups of lamellas are always in a taut condition.

13. Device according to any of the preceding claims, characterised in that the lamellas (12-13), save the extremities (16) which have to be put into contact with the conduit (17), the solenoid (15) and the pressure means (18) are put in a receptacle (38), which receptacle (38) is mainly composed of a housing (39) with a lid (40) forming part thereof, and in that the solenoid (15) is fixed in this housing (39).

14. Device according to any of the preceding claims, characterised in that it is provided with stop means which restrict the driving in of the lamellas (12-13), against the force of the pressure elements (18).

15. Device according to any of the preceding claims, characterised in that the lamellas (12-13) can be driven in, against the force of the pressure elements (18), over a distance of at least 1 cm.

16. Device according to any of the preceding claims, characterised in that it is provided with one or several seats (57-58) which make it possible to centre the device (10) in relation to the conduit (17).
